# EUROPEAN PATENT SPECIFICATION

(11) **EP 3 162 257 B1**
(45) Date of publication and mention of the grant of the patent: **04.03.2020**
(21) Application number: 16195569.5
(22) Date of filing: 25.10.2016
(51) Int. Cl.: A47J 31/52

(54) **APPARATUS FOR PRODUCING A BEVERAGE COMPRISING A COFFEE MACHINE AND A CONTAINER FOR A LIQUID FOODSTUFF**
VORRICHTUNG ZUR HERSTELLUNG EINES GETRÄNKS MIT EINER KAFFEEMASCHINE UND EINEM BEHÄLTER FÜR EIN FLÜSSIGES LEBENSMITTEL
APPAREIL DE PRODUCTION D'UNE BOISSON COMPRENANT UNE MACHINE À CAFÉ ET UN RÉCIPIENT POUR UN PRODUIT ALIMENTAIRE LIQUIDE

(30) Priority: 26.10.2015 IT UB20154828
(43) Date of publication of application: 03.05.2017
(73) Proprietor: De'Longhi Appliances S.r.l., 31100 Treviso (IT)
(72) Inventor: DE' LONGHI, GIUSEPPE, 31100 TREVISO (IT); ZOTTAREL, ANDREA, 30027 SAN DONA' DI PIAVE (VENEZIA) (IT)
(74) Representative: Rapisardi, Mariacristina

(56) References cited:
- WO-A1-2015/042652
- WO-A2-2010/009975
- US-A1- 2004 183 693
- US-A1- 2013 115 343

## Description

The present invention relates to an apparatus for producing a beverage comprising a coffee machine and a container for a liquid foodstuff.

The apparatus consisting of a coffee machine that can be associated to a jug containing milk that must be processed for the realisation for example of a cappuccino are known to the state of the art.

Typically the coffee machine has an infusion unit and a steam delivery device, while the jug has a milk emulsifying device having a connection fitting to the steam delivery device of the coffee machine.

The emulsifying device comprises a mixing chamber, a channel for the intake of milk into the mixing chamber, a channel for the intake of air into the mixing chamber, a channel for the intake of steam into the mixing chamber which has at its end the aforementioned connection fitting to the steam delivery device of the coffee machine, and a milk dispensing channel.

The control of the emulsifying process is generally carried out entirely by the logical unit of the coffee machine.

The control unit of the coffee machine normally just activates and deactivates the steam delivery in a predetermined way depending on the selection made by the user.

However, anomalies in the emulsifying process not recognisable by the logical unit of the coffee machine may sometimes occur with the consequence that the beverage produced may not have the organoleptic properties desired.

Such anomalies may cause the functional impairment of the container whose repair or even its replacement require time and money.

WO2010/009975 A2, US2013115343A1 and WO2015/042652 A1 disclose an apparatus for producing a beverage comprising a coffee machine and a container for a liquid foodstuff according to the preamble of claim 1.

The technical task of the present invention is therefore to realise an apparatus for producing a beverage comprising a coffee machine and a container for a liquid foodstuff, and a method for controlling a process for producing a beverage, which allow to eliminate the technical drawbacks of the prior art.

As part of this technical task an object of the invention is to realise an apparatus of the aforementioned type that allows an accurate control of the production process of the beverage.

Another object of the invention is to realise an apparatus of the aforementioned type that allows to identify and report anomalies in the process for producing a beverage.

Another object of the invention is to realise an apparatus of the aforementioned type that allows to eliminate anomalies in the process for producing a beverage.

A further object of the invention is to realise an apparatus of the aforementioned type that allows to identify, signal and eliminate anomalies in real time in the process for producing a beverage.

The technical task as well as these and other objects, according to the present invention are achieved by realizing an apparatus for producing a beverage comprising a coffee machine and a container for a liquid foodstuff according to claim 1.

At least one further peripheral unit may be composed of at least one sensor of a parameter of the liquid foodstuff.

In a preferred embodiment of the invention said transmitter comprises a transmitting antenna and said receiver comprises a receiving antenna.

In a preferred embodiment of the invention said transmitter comprises a low voltage power supply.

In a preferred embodiment of the invention said receiver and said at least one peripheral unit are incorporated fluid-tightly in said container.

In a preferred embodiment of the invention said container is a milk container.

The invention, however, is not limited to milk but also encompasses any liquid foodstuff, such as chocolate or much more.

In a preferred embodiment of the invention said container has an emulsifying device having a mixing chamber, a channel for the intake of the liquid foodstuff into the mixing chamber, a channel for the intake of air into the mixing chamber, a channel for the intake of steam into the mixing chamber that can be connected to a steam delivery device of the coffee machine and a dispensing channel.

In a preferred embodiment of the invention said air intake channel has a mechanism for regulating the air flow, activatable by said actuator.

The present invention also provides a method for controlling a process for producing a beverage with an apparatus comprising a coffee machine and a container for a liquid foodstuff, wherein:
- the coffee machine is equipped with a wireless transmitter;
- the container is equipped with a wireless receiver provided with a logical unit which is programmable;
- the container is equipped with at least one peripheral unit communicating with the logical unit of the receiver;
- the transmitter transmits energy for powering the logical unit of the receiver to the receiver; and
- the receiver controls said at least one peripheral unit and sends information about its status to the transmitter.

Further characteristics and advantages of the invention will more fully emerge from the description of a preferred but not exclusive embodiment of the apparatus for producing a beverage according to the invention, illustrated by way of indicative and non-limiting example in the accompanying drawings, wherein:

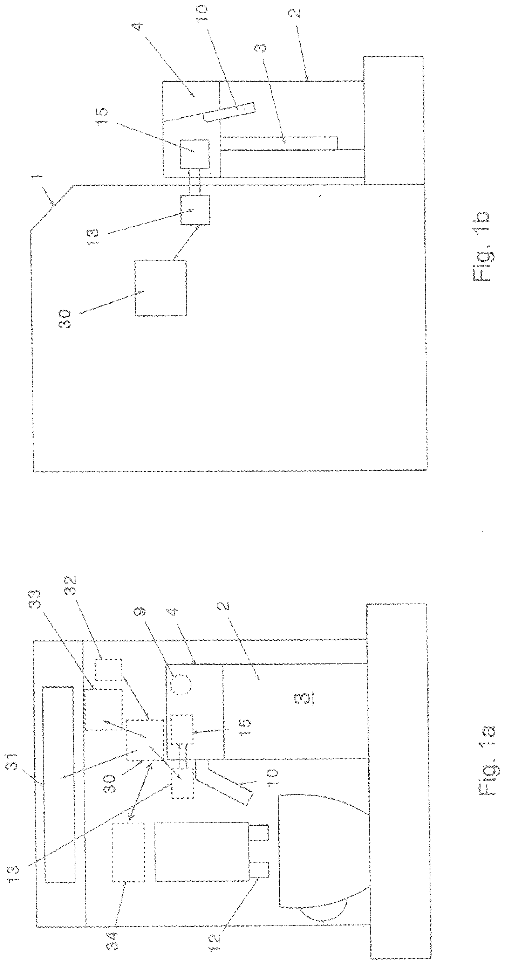

figures 1a and 1b show schematically the apparatus;

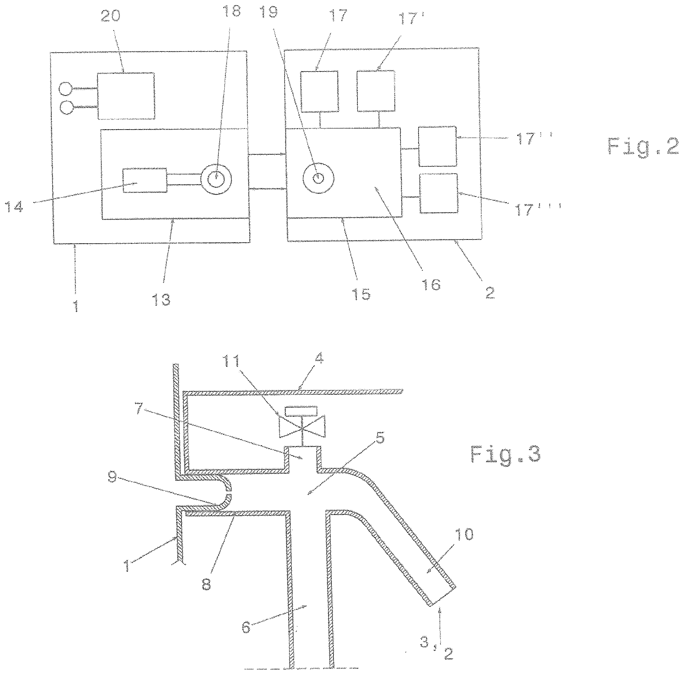

figure 2 shows schematically the receiver and the transmitter;
figure 3 shows in more detail the container connected to the steam delivery device of the coffee machine.

With reference to the figures cited, an apparatus for producing a beverage comprising a coffee machine 1 and a container 2 for a liquid foodstuff is shown. The container 2 has as we shall see below a mechanical connection and a fluid connection removably connected with the coffee machine 1.

The coffee machine includes in a known way a programming dashboard 31, a hydraulic circuit comprising a water supply pump 32, at least a boiler 33 for producing water and/or steam, an infusion unit 34, a coffee dispenser 12 and a steam delivery device 9.

The coffee machine 1 also includes a central control logical unit 30 to which the programming dashboard 31, the water feed pump 32, the boiler 33 and the infusion unit 34 are connected.

In the discussion that follows we will refer to the preferred but not exclusive application wherein the container 2 is a milk container comprising a milk containing body 3 and a lid 4 for closing off the milk containing body 3.

The milk container 2 comprises a milk emulsifying device having a mixing chamber 5, a channel 6 for the intake of milk into the mixing chamber 5, a channel 7 for the intake of air into the mixing chamber 5, a channel 8 for the intake of steam into the mixing chamber 5, removably connected to a steam delivery device 9 of the coffee machine 1, and a milk dispensing channel 10.

The mechanical connection and the fluid connection between the coffee machine 1 and the container 2 is defined by the engagement between the steam delivery device 9 and the steam inlet channel 8.

In the present case the mechanical connection is rigid, as the steam delivery device 9 and the steam inlet channel 8 are rigid elements, while the fluid connection refers to the steam produced in the coffee machine 1 and used in the emulsifying device in the container 2.

The milk emulsifying device is integrated in the lid 4 but in a different embodiment of the invention it can also be integrated in the containment body 3. The mixing is realised by creating a Venturi effect into the mixing chamber 5, for example through an outlet end with decreasing section of the steam delivery device 9 that, when the steam flow is supplied, causes in the mixing chamber 5 a depression with which milk and air are aspirated into the mixing chamber 5 from their respective channels 6 and 7.

The mixing can also be realised in a different way without exploiting the Venturi effect, for example through pump means in the milk and air channels 6, 7.

The air inlet channel 7 is equipped with a mechanism for regulating the air flow, for example, but not necessarily a proportional valve 11, for regulating the froth degree of the milk dispensed.

A wireless transmitter 13 having a logical unit 14 is advantageously incorporated in the coffee machine 1 and a wireless receiver 15 having a logical unit 16 communicating with the logical unit 14 of the transmitter 13 is incorporated in the container 2.

The transmitter 13 is connected to the central logical unit 30 of the coffee machine 1.

The transmitter 13 comprises a low voltage power supply 20 connected for example to the network.

The transmitter 14 also comprises a transmitting antenna 18.

The receiver 15 comprises a receiving antenna 19 that can be coupled inductively to the transmitting antenna 18 of the transmitter 13.

The transmitter 13 and the receiver 15 are configured for the exchange of energy and data through their antennas 18, 19.

One or more peripheral units 17, 17', 17", 17''' communicating with the logical unit 16 of the receiver 15 are also incorporated in the container 2.

The transmitted energy from the transmitter 13 to the receiver 15 is suitable to power the logical unit 16 of the wireless receiver 15 and every peripheral unit 17, 17', 17", 17'''.

The peripheral units 17, 17', 17", 17''' comprise at least one sensor of a parameter of the liquid foodstuff, and in particular a milk temperature sensor in the containment body 3 and/or a temperature sensor of the milk dispensed, and/or a milk level sensor in the containment body 3.

The peripheral units 17, 17', 17", 17''' also comprise a display, in particular a visual screen.

The peripheral units 17, 17', 17", 17''' comprise finally one or more actuators of mechanisms provided in the container 2, for example an actuator of the mechanism regulating the air flow.

The peripheral units may include naturally a selection of the aforementioned devices, or further devices of the same type or even different type.

Advantageously the receiver 15, the peripheral units 17, 17', 17", 17''' connected to it and the relative electrical connections are incorporated fluid-tightly in the container 2 and in particular are housed in the lid 4 inside suitable sealed seats. At least a few sealed seats are made at least partly of transparent material to allow the visual access to the components housed therein, necessary for example for the display.

In this way the container 2 is entirely washable by hand or in a dishwasher.

The operation of the apparatus according to the invention appears clear from the description and illustration and, in particular, is substantially as follows.

The container 2 is coupled to the coffee machine 1 through the connection of the steam intake channel 8 to the steam delivery device 9.

In a coupled condition the receiver 15 integrated in the container 2 is within the operating range of the transmitter 13 and receives supply energy from its logical unit 16 through the inductive coupling between its antenna 19 and the antenna 18 of the transmitter 13.

The receiver 15 thus powered is able to control not only its peripheral units 17, 17', 17", 17''' but also to exchange data with the transmitter 13 to which it sends back a feedback about its status.

The logical unit 16 of the receiver 15 is programmable directly from the transmitter 13 in order to set and change the control mode of the peripheral units 17, 17', 17", 17''' and the data exchange with the transmitter 13 itself.

Therefore the transmitter 13 through its logical unit 14 interprets the data and the feedback the receiver 15 sends to it and on the basis thereof it decides whether and how to modify the power signal of the receiver 15 and whether to take other actions both for the optimization of the performances and for the diagnostic and maintenance execution.

As an example, after the user selects the desired beverage through the programming dashboard of the coffee machine 1, the information on the selection made is transmitted from the transmitter 13 to the receiver 15 which regulates consistently with the information received the proportional valve opening on the air channel 7.

During the mixing execution in the emulsifying device the control unit 16 of the receiver 15 measures the temperature of the milk dispensed and the milk level in the container 2 and displays in real time on the display connected to it the measurements made.

The container status 2 during the entire dispensing and, in particular, the temperature of the milk dispensed and the milk level in the container 2, are transmitted in real time or afterwards from the receiver 15 to the transmitter 13 for the execution of an interpretive analysis.

Before dispensing starts, if the milk temperature sensor in the container 2 detects a temperature which deviates from a reference temperature range, the control unit 16 of the receiver 15 controls the visualisation on the display connected to it of a message to the user indicating that the milk is too cold or too hot and must be replaced and at the same time it brings the information back to the transmitter 13 which instructs the central logical unit 30 of the machine to block the steam flow activation and consequently to interdict the milk dispensing cycle.

The user now replaces the milk in the container 2 and selects again the beverage desired. If the milk temperature detected in the container 2 is within the reference range, the control unit 16 of the receiver 15 commands the visualisation on the display connected to it of a message to the user indicating that the milk is at the correct temperature and at the same time it brings the information back to the transmitter 13 which instructs the central logical unit 30 of the machine to activate the steam flow and consequently the milk dispensing cycle.

The receiver 15 also receives from the level sensor the milk level in the container 2 at the beginning of the milk dispensing cycle and the milk level in the container 2 at the end of the milk dispensing cycle and brings the information back to the transmitter 13 which in turn reports it to the central logical unit 30 of the coffee machine.

The central logical unit 30 of the coffee machine with the available data counts the amount of milk consumed in the milk dispensing cycle and compares the data with a range of reference values in order to assess whether the product and the selection made by the user match or not. If the real consumption of milk detected is outside the expected reference range, the central control unit 30 resets the activation time of the supply pump to fix the error in the next milk dispensing cycles.

More generally, once the selection has been made and the logical unit 16 of the receiver 15 has been programmed consistently with the selection made, the receiver 15 sends to the transmitter 13 a feedback with the information related to the supply received, its status and whether the selection has been completed.

The apparatus for producing a beverage comprising a coffee machine and a container for a liquid foodstuff as conceived herein is susceptible to many modifications and variations;
furthermore, all the details are replaceable by technically equivalent elements. The materials used, as well as the dimensions, may in practice be of any type according to requirements and the state of the art.

## Claims

1. An apparatus for producing a beverage comprising a coffee machine (1) and a container (2) for a liquid foodstuff, incorporated in said coffee machine (1) there being a wireless transmitter (13) having a logical unit (14), and incorporated in said container (2) there being a wireless receiver (15) having a logical unit (16) receiving data and energy from said transmitter (13), and at least one peripheral unit (17, 17', 17", 17''') communicating with the logical unit (16) of said receiver (15), said transmitter (13) transmitting to said receiver (15) data and energy required to power said logical unit (16) of said wireless receiver (15) and said at least one peripheral unit (17, 17', 17", 17'''), said at least one peripheral unit (17, 17', 17", 17''') comprising at least a display and/or at least one actuator of a mechanism provided in the container, **characterized in that** the logical unit (16) of said receiver (15) is configured for being programmable directly from the transmitter (13) in order to set and change the control mode of said at least one peripheral unit (17, 17',17", 17''') and the date exchange with said transmitter (13) itself.

2. The apparatus for producing a beverage according to claim 1, **characterized in that** said at least one peripheral unit (17, 17', 17", 17''') further comprises at least one sensor of a parameter of the liquid foodstuff.

3. The apparatus for producing a beverage according to claim 1, **characterized in that** said transmitter (13) comprises a transmitting antenna (18) and said receiver (15) comprises a receiving antenna (19).

4. The apparatus for producing a beverage according to claim 1, **characterized in that** said transmitter (13) comprises a low voltage power supply (20).

5. The apparatus for producing a beverage according to claim 2, **characterized in that** said sensor is a liquid temperature sensor.

6. The apparatus for producing a beverage according to claim 2, **characterized in that** said sensor is a liquid level sensor.

7. The apparatus for producing a beverage according to claim 1, **characterized in that** said receiver (15) and said at least one peripheral unit (17, 17', 17", 17''') are incorporated fluid-tightly in said container (2).

8. The apparatus for producing a beverage according to claim 1, **characterized in that** said container (2) is a milk container comprising a milk containing body (3) and a lid (4) for closing off the milk containing body (3).

9. The apparatus for producing a beverage according to claim 1, **characterized in that** said container (2) has an emulsifying device having a mixing chamber (5), a channel (6) for the intake of the liquid foodstuff into the mixing chamber (5), a channel (7) for the intake of air into the mixing chamber (5), a channel (8) for the intake of steam into the mixing chamber (5), removably connected to a steam delivery device (9) of the coffee machine (1), and a dispensing channel (10).

10. The apparatus for producing a beverage according to the preceding claim, **characterized in that** said air intake channel (7) has a mechanism (11) for regulating the air flow, activatable by said actuator.

11. A method for controlling a process for producing a beverage with an apparatus comprising a coffee machine (1) and a container (2) for a liquid foodstuff, wherein:
- the coffee machine (1) is equipped with a wireless transmitter (13);
- the container (2) is equipped with a wireless receiver (15) provided with a logical unit (16) which is programmable;
- the container (2) is equipped with at least one peripheral unit (17, 17', 17", 17''') communicating with the logical unit (16) of the receiver (15), said at least one peripheral unit (17, 17', 17", 17''') comprising at least a display and/or at least one actuator of a mechanism provided in the container;
- the transmitter (13) transmits to the receiver (15) energy for powering the logical unit (16) of the receiver (15) and said at least one peripheral unit (17, 17', 17", 17'''); and
- the receiver (15) controls said at least one peripheral unit (17, 17', 17", 17''') and sends information about its status to the transmitter (13), the logical unit (16) of the receiver (15) being programmed directly from the transmitter (13) in order to set and change the control mode of the peripheral units (17, 17', 17", 17''') and the data exchange with the transmitter (13) itself.

## Patentansprüche

1. Vorrichtung zur Herstellung eines Getränks mit einer Kaffeemaschine (1) und einem Behälter (2) für ein flüssiges Lebensmittel, integriert in der Kaffeemaschine (1), wobei ein drahtloser Sender (13) bereitgestellt ist, der eine Logikeinheit (14) aufweist, und im Behälter (2) ein drahtloser Empfänger (15) integriert ist, der eine Logikeinheit (16) aufweist, die Daten und Energie vom Sender (13) empfängt, und mindestens eine Peripherieeinheit (17, 17', 17", 17'''), die mit der Logikeinheit (16) des Empfängers (15) kommuniziert, wobei der Sender (13) dem Empfänger (15) die Daten und die Energie übermittelt, die erforderlich sind, um die Logikeinheit (16) des drahtlosen Empfängers (15) und die mindestens eine Peripherieeinheit (17, 17', 17", 17''') zu versorgen, wobei die mindestens eine Peripherieeinheit (17, 17', 17", 17''') mindestens ein Display und/oder mindestens einen Steller eines Mechanismus umfasst, bereitgestellt im Behälter, **dadurch gekennzeichnet, dass** die Logikeinheit (16) des Empfängers (15) ausgelegt ist, um direkt vom Sender (13) programmiert zu werden, um den Steuermodus der mindestens einen Peripherieeinheit (17, 17', 17", 17''') und den Datenaustausch mit dem Sender (13) einzustellen und zu verändern.

2. Vorrichtung zur Herstellung eines Getränks nach Anspruch 1, **dadurch gekennzeichnet, dass** die mindestens eine Peripherieeinheit (17, 17', 17", 17''') zudem mindestens einen Sensor eines Parameters des flüssigen Lebensmittels umfasst.

3. Vorrichtung zur Herstellung eines Getränks nach Anspruch 1, **dadurch gekennzeichnet, dass** der Sender (13) eine Sendeantenne (18) umfasst und der Empfänger (15) eine Empfangsantenne (19) umfasst.

4. Vorrichtung zur Herstellung eines Getränks nach Anspruch 1, **dadurch gekennzeichnet, dass** der Sender (13) eine Niedervoltstromversorgung (20) umfasst.

5. Vorrichtung zur Herstellung eines Getränks nach Anspruch 2, **dadurch gekennzeichnet, dass** der Sensor ein Flüssigtemperatursensor ist.

6. Vorrichtung zur Herstellung eines Getränks nach Anspruch 2, **dadurch gekennzeichnet, dass** der Sensor ein Flüssigniveausensor ist.

7. Vorrichtung zur Herstellung eines Getränks nach Anspruch 1, **dadurch gekennzeichnet, dass** der Empfänger (15) und die mindestens eine Peripherieeinheit (17, 17', 17", 17''') fluiddicht im Behälter (2) integriert sind.

8. Vorrichtung zur Herstellung eines Getränks nach Anspruch 1, **dadurch gekennzeichnet, dass** der Behälter (2) ein Milchbehälter ist, umfassend ein Milchbehältergehäuse (3) und einen Deckel (4) zum Verschließen des Milchbehältergehäuses (3).

9. Vorrichtung zur Herstellung eines Getränks nach Anspruch 1, **dadurch gekennzeichnet, dass** der Behälter (2) eine Emulgiervorrichtung aufweist, aufweisend eine Mischkammer (5), einen Kanal (6) für den Einlauf des flüssigen Lebensmittels in die Mischkammer (5), einen Kanal (7) für die Zuführung von Luft in die Mischkammer (5), einen Kanal (8) für die Zuführung von Dampf in die Mischkammer (5), entfernbar verbunden mit einer Dampfzuführungsvorrichtung (9) der Kaffeemaschine (1), und einen Ausgabekanal (10).

10. Vorrichtung zur Herstellung eines Getränks nach dem vorhergehenden Anspruch, **dadurch gekennzeichnet, dass** der Luftzufuhrkanal (7) einen Mechanismus (11) zum Regeln des Luftstroms aufweist, der durch den Steller aktivierbar ist.

11. Verfahren zur Steuerung eines Prozesses zur Herstellung eines Getränks mit der Vorrichtung mit einer Kaffeemaschine (1) und einem Behälter (2) für ein flüssiges Lebensmittel, wobei
- die Kaffeemaschine (1) mit einem drahtlosen Sender (13) ausgestattet ist;
- der Behälter (2) mit einem drahtlosen Empfänger (15) ausgestattet ist, versehen mit einer Logikeinheit (16), die programmierbar ist;
- der Behälter (2) mit mindestens einer Peripherieeinheit (17, 17', 17", 17''') ausgestattet ist, die mit der Logikeinheit (16) des Empfängers (15) kommuniziert, wobei die mindestens eine Peripherieeinheit (17, 17', 17", 17''') mindestens ein Display und/oder mindestens einen Steller eines Mechanismus umfasst, bereitgestellt im Behälter;
- der Sender (13) dem Empfänger (15) Energie übermittelt, um die Logikeinheit (16) des Empfängers (15) und mindestens eine Peripherieeinheit (17, 17', 17", 17''') zu versorgen, und
- der Empfänger (15) die mindestens eine Peripherieeinheit (17, 17', 17", 17''') steuert und Informationen über deren Zustand an den Sender (13) übermittelt, wobei die Logikeinheit (16) des Empfängers (15) direkt vom Sender (13) programmiert wird, um den Steuermodus der Peripherieeinheiten (17, 17', 17", 17''') und den Datenaustausch mit dem Sender (13) einzustellen und zu ändern.

## Revendications

1. Appareil de production d'une boisson comprenant une machine à café (1) et un récipient (2) pour un produit alimentaire liquide, un transmetteur sans fil (13) incorporé dans ladite machine à café (1) comportant une unité logique (14), et un récepteur sans fil (15) incorporé dans ledit récipient (2) comportant une unité logique (16) recevant des données et de l'énergie dudit transmetteur (13), et au moins une unité périphérique (17, 17', 17", 17''') communiquant avec l'unité logique (16) dudit récepteur (15), ledit transmetteur (13) transmettant au dit récepteur (15) des données et l'énergie requise pour alimenter ladite unité logique (16) dudit récepteur sans fil (15) et ladite au moins une unité périphérique (17, 17', 17", 17'''), ladite au moins une unité périphérique (17, 17', 17", 17''') comprenant au moins un écran et/ou au moins un actionneur d'un mécanisme prévu dans le récipient, **caractérisé en ce que** l'unité logique (16) dudit récepteur (15) est configurée pour être programmable directement du transmetteur (13) afin de définir et de modifier le mode de commande de ladite au moins une unité périphérique (17, 17', 17", 17''') et l'échange de données avec ledit transmetteur (13) lui-même.

2. Appareil de production d'une boisson selon la revendication 1, **caractérisé en ce que** ladite au moins une unité périphérique (17, 17', 17", 17''') comprend de plus au moins un détecteur d'un paramètre du produit alimentaire liquide.

3. Appareil de production d'une boisson selon la revendication 1, **caractérisé en ce que** ledit transmetteur (13) comprend une antenne de transmission (18) et ledit récepteur (15) comprend une antenne de réception (19).

4. Appareil de production d'une boisson selon la revendication 1, **caractérisé en ce que** ledit transmetteur (13) comprend un bloc d'alimentation à basse tension (20).

5. Appareil de production d'une boisson selon la revendication 2, **caractérisé en ce que** ledit détecteur est une sonde de température du liquide.

6. Appareil de production d'une boisson selon la revendication 2, **caractérisé en ce que** ledit détecteur est un détecteur de niveau du liquide.

7. Appareil de production d'une boisson selon la revendication 1, **caractérisé en ce que** ledit récepteur (15) et ladite au moins une unité périphérique (17, 17', 17", 17''') sont incorporés de manière étanche dans ledit récipient (2).

8. Appareil de production d'une boisson selon la revendication 1, **caractérisé en ce que** ledit récipient (2) est un récipient de lait comprenant un corps de contenance (3) de lait et un couvercle (4) pour fermer le corps de contenance (3) de lait.

9. Appareil de production d'une boisson selon la revendication 1, **caractérisé en ce que** ledit récipient (2) comporte un dispositif d'émulsion comportant une chambre de mélange (5), un canal (6) pour l'admission du produit alimentaire liquide dans la chambre de mélange (5), un canal (7) pour l'admission d'air dans la chambre de mélange (5), un canal (8) pour l'admission de vapeur dans la chambre de mélange (5), raccordé de façon amovible à un dispositif de distribution de vapeur (9) de la machine à café (1), et un canal de distribution (10) .

10. Appareil de production d'une boisson selon la revendication précédente, **caractérisé en ce que** ledit canal d'admission d'air (7) comporte un mécanisme (11) servant à régler le flux d'air, pouvant être activé par ledit actionneur.

11. Procédé de commande d'un processus de production d'une boisson avec un appareil comprenant une machine à café (1) et un récipient (2) pour un produit alimentaire liquide, dans lequel :
- la machine à café (1) est équipée d'un transmetteur sans fil (13) ;
- le récipient (2) est équipé d'un récepteur sans fil (15) pourvu d'une unité logique (16) étant programmable ;
- le récipient (2) est équipé d'au moins une unité périphérique (17, 17', 17", 17''') communiquant avec l'unité logique (16) du récepteur (15), ladite au moins une unité périphérique (17, 17', 17", 17''') comprenant au moins un écran et/ou au moins un actionneur d'un mécanisme prévu dans le récipient ;
- le transmetteur (13) transmet au récepteur (15) l'énergie servant à alimenter l'unité logique (16) du récepteur (15) et ladite au moins une unité périphérique (17, 17', 17", 17''') et
- le récepteur (15) commande ladite au moins une unité périphérique (17, 17', 17", 17''') et envoie des informations sur son état au transmetteur (13), l'unité logique (16) du récepteur (15) étant programmée directement du transmetteur (13) afin de définir et de modifier le mode de commande de ladite au moins une unité périphérique (17, 17',17", 17''') et l'échange de données avec ledit transmetteur (13) lui-même.
